# EUROPÄISCHE PATENTSCHRIFT

(11) **EP 3 110 865 B1**
(45) Veröffentlichungstag und Bekanntmachung des Hinweises auf die Patenterteilung: **14.03.2018**
(21) Anmeldenummer: 15700120.7
(22) Anmeldetag: 09.01.2015
(51) Int. Cl.: C08G 18/48, C08G 18/66, C08G 18/75, C08G 18/08, C08G 18/12, C09D 175/04, C08G 18/34, C08G 18/40, C08G 18/42

(54) **POLYMER IN FARB- UND/ODER EFFEKTGEBENDEN MEHRSCHICHTIGEN LACKIERUNGEN**
POLYMER IN COLOUR AND/OR DECORATIVE EFFECT MULTILAYER COATINGS
POLYMÈRE DANS DES PEINTURES MULTICOUCHES DONNANT DES COULEURS ET/OU DES EFFETS

(30) Priorität: 26.02.2014 EP 14156823
(43) Veröffentlichungstag der Anmeldung: 04.01.2017
(73) Patentinhaber: BASF Coatings GmbH, 48165 Münster (DE)
(72) Erfinder: LETTMANN, Bernhard, 48317 Drensteinfurt (DE); HOFFMANN, Peter, 48308 Senden (DE); JASPER, Raphaela, 48153 Münster (DE); KUHN, Kai, 48301 Nottuln (DE); KEMPER, Heinz-Jürgen, 44357 Dortmund (DE); SIEGERT, Marion, 48565 Steinfurt (DE)
(74) Vertreter: BASF IP Association
(86) Internationale Anmeldenummer: PCT/EP2015/050311
(87) Internationale Veröffentlichungsnummer: WO 2015/128107

(56) Entgegenhaltungen:
- WO-A1-90/01041
- DE-A1- 19 948 004

## Beschreibung

Die Erfindung betrifft ein neuartiges Polymer. Sie betrifft ferner einen pigmentierten wässrigen Basislack, welcher dieses Polymer enthält sowie die Verwendung des besagten Polymers in pigmentierten wässrigen Basislacken. Sie betrifft ferner ein Verfahren zur Herstellung von Mehrschichtlackierungen sowie die mit Hilfe des besagten Verfahrens herstellbaren Mehrschichtlackierungen. Zudem betrifft die vorliegende Erfindung die Reparatur von Fehlstellen auf Mehrschichtlackierungen.

Aus dem Stand der Technik ist eine Vielzahl von Verfahren zur Herstellung von farb- und/oder effektgebenden mehrschichtigen Lackierungen bekannt. Aus dem Stand der Technik (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Dabei treten unter bestimmten Bedingungen Haftungsprobleme, insbesondere zwischen Basislack und Klarlack auf. Zudem wird das Verfahren auch für die Automobilreparaturlackierung von Automobilkarossen eingesetzt. Hier ist sowohl die OEM-Automobilreparaturlackierung als auch die Automobilreparaturlackierung gemeint, welche beispielsweise in einer Werkstatt stattfindet. Dabei ist vor allem die Haftung zwischen dem bei der Reparaturlackierung eingesetzten Basislack und der Erstlackierung problematisch.

Für wässrige Basislacke haben sich so genannte Polyurethan-Dispersionen als besonders geeignet erwiesen. Häufig verwendete Polyurethandispersionen sind beispielsweise in WO 90/01041 beschrieben.

Allgemein werden im Bereich der Autoreparaturlackierung häufig so genannte Mischsysteme eingesetzt. Aus diesen wird erst beim Endkunden (Reparaturlackierer) durch Zusammenstellen verschiedener Komponenten ein Wasserbasislack erstellt.

Der Endkunde erhält eine Mischformel; diese beinhaltet eine Mischung verschiedener pigmentierter Lackkomponenten aus denen der Zielfarbton erstellt wird. Zusammen mit weiteren Komponenten entsteht daraus der Wasserbasislack. Ein solches Mischsystem ist in der DE 19942515 vorbeschrieben.

Der vorliegenden Erfindung lag die Aufgabe zugrunde, ein Polymer zur Verfügung zu stellen, mit Hilfe dessen sich Beschichtungen herstellen lassen, die die oben bezeichneten Nachteile des Standes der Technik nicht aufweisen. Hierunter ist eine Haftungsverbesserung sowohl bei der Lackierung von Metall- und Kunststoffsubstraten als auch insbesondere bei der Autoreparaturlackierung zu verstehen.

Bei der Lackierung von Metall- und Kunststoffsubstraten steht hier neben der Haftung des Basislacks auf dem Untergrund die Haftung zwischen Basislack und Klarlack im Vordergrund. Bei der Autoreparaturlackierung steht neben der Haftung zwischen Basislack und Klarlack die Haftung zwischen Basislack und Erstlackierung im Vordergrund. Diese soll insbesondere für den Einsatz in der Autoreparaturlackierung verbessert werden.

Die Haftungsproblematik ist insbesondere dann eklatant, wenn die beschichteten Substrate der Witterung ausgesetzt sind. Die Aufgabe der vorliegenden Erfindung bestand somit auch darin, Beschichtungen zur Verfügung zu stellen, die auch, nachdem sie der Witterung ausgesetzt waren, noch hervorragende Haftungseigenschaften besitzen.

Ein Haftungsverlust manifestiert sich darin, dass bei Einwirkung von Steinschlägen bei gealterten (der Witterung ausgesetzten) Reparaturlackierungen Abplatzungen auftreten. Bei der Reinigung der Karosserie mittels heute vielerorts üblichen Dampfstrahlgeräten kann dann eine solche, durch einen Steinschlag hervorgerufene kleine Abplatzung zu einer großflächigen Ablösung des Lackfilmes führen. Insbesondere betroffen sind hochchromatische Farben, die einen hohen Pigmentgehalt in der Basislackschicht aufweisen.

Diese Aufgabe wurde überraschenderweise durch ein Polymer gelöst, welches herstellbar ist durch Umsetzung von
(A) mindestens einem Polymer, herstellbar durch Umsetzung von
   (a) Dimerfettsäuren mit
   (b) mindestens einem Polyether der allgemeinen Strukturformel (I) 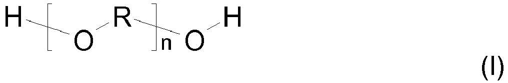 wobei es sich bei R um einen C₃- bis C₆-Alkylenrest handelt und n entsprechend so gewählt ist, dass der besagte Polyether ein zahlenmittleres Molekulargewicht von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht von 1500 bis 5000 g/mol und eine Säurezahl < 10 mg KOH/g besitzt,
(B) mindestens einem Polyether der allgemeinen Strukturformel (II) 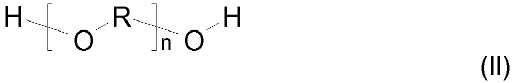 wobei es sich bei R um einen C₃- bis C₆-Alkylenrest handelt und n entsprechend so gewählt ist, dass der besagte Polyether ein zahlenmittleres Molekulargewicht von 1500 bis 3000 g/mol besitzt,
(C) mindestens einer Verbindung mit mindestens einer zur Anionenbildung befähigten funktionellen Gruppe und/oder mindestens einer anionischen Gruppe, und mindestens einer, insbesondere mindestens zwei, mit Isocyanaten reaktionsfähigen funktionellen Gruppen, wobei die Verbindung von (A) und (B) verschieden ist,
(D) mindestens einem Polyisocyanat, und
(E) gegebenenfalls mindestens einem Mono- oder Diol, das von (A), (B) und (C) verschieden ist,
(F) mindestens einer Verbindung mit mehr als zwei mit Isocyanaten reaktionsfähigen funktionellen Gruppen, wobei die Verbindung von (A), (B) und (C) verschieden ist,
und gegebenenfalls Neutralisation der zur Anionenbildung befähigten Gruppen der Komponente (C).

Die Bedingung, dass n so gewählt wird, dass der besagte Polyether ein zahlenmittleres Molekulargewicht von 450 bis 2200 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14.

So weit im Folgenden Normen z.B. zur Bestimmung von Parametern angegeben sind, so ist unter der Angabe der jeweiligen Norm, die am Tag der Einreichung dieser Anmeldung gültige Fassung zu verstehen.

Bei dem erfindungsgemäßen Polymer handelt es sich bevorzugt um ein Polyurethan.

### Komponente (a):

Das erfindungsgemäße Reaktionsprodukt wird unter Einsatz mindestens einer Dimerfettsäure (a) hergestellt.

Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₂- bis C₂₂-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthalten. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung überwiegend dimere Produkte entstehen, die also genau zwei Fettsäuremoleküle enthalten, rechtfertigt diese ohnehin gängige Benennung. Ein alternativer Ausdruck für den einschlägigen Begriff "Dimerfettsäuren" ist also "Gemisch enthaltend dimerisierte Fettsäuren".

Die einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma Cognis sowie Unidyme 10 und Unidyme TI der Firma Arizona Chemical.

### Komponente (b):

Als Komponente (b) wird mindestens ein Polyether der allgemeinen Strukturformel (I) 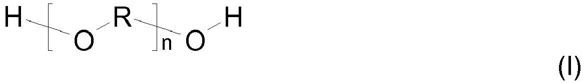 eingesetzt, wobei es sich bei R um einen C₃ bis C₆-Alkylrest handelt. Der Index n ist jeweils so zu wählen, dass der besagte Polyether ein zahlenmittleres Molekulargewicht von 450 bis 2200 g/mol besitzt. Besonders bevorzugt besitzt er ein zahlenmittleres Molekulargewicht von 700 bis 1400 g/mol und ganz besonders bevorzugt von 800 bis 1200 g/mol.

Das zahlenmittlere Molekulargewicht wird im Rahmen der vorliegenden Erfindung, sofern nicht spezifisch anders angegeben, mittels Dampfdruckosmose bestimmt. Gemessen wird mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

In dem erfindungsgemäß einzusetzenden Polyether können alle n Reste R gleich sein. Ebenso ist es aber auch möglich, das unterschiedliche Arten von Resten R vorhanden sind. Bevorzugt sind alle Reste R gleich.

Bei R handelt es sich bevorzugt um einen C₃- oder einen C₄-Alkylenrest. Besonders bevorzugt handelt es sich um einen iso-Propylen- oder einen Tetramethylenrest.

Ganz besonders bevorzugt handelt es sich bei dem erfindungsgemäß einzusetzenden Polyether um Polypropylenglycol oder um Polytetrahydrofuran.

### Komponente (A):

**Die** Herstellung des Polymers (A) weist keine Besonderheiten auf. Üblicherweise erfolgt die Veresterung mit Hilfe eines Wasserabscheiders. Dabei werden die Komponenten (a) und (b) in einem molaren Verhältnis von 0,7/2,3 bis 1,3/1,7, bevorzugt von 0,8/2,2 bis 1,2/1,8 und ganz besonders bevorzugt von 0,9/2,1 bis 1,1/1,9 eingesetzt. Die Reaktion wird abgebrochen, wenn das Polymer (A) ein Säurezahl von < 10 mg KOH/g besitzt. Bevorzugt besitzt es eine Säurezahl von < 7,5 mg KOH/g und ganz besonders bevorzugt von < 5 mg KOH/g. Die Säurezahl wird dabei gemäß der DIN EN ISO 2114 bestimmt.

Das resultierende Polymer besitzt ein zahlenmittleres Molekulargewicht von 1500 bis 5000 g/mol, bevorzugt 2000 bis 4500 g/mol und ganz besonderes bevorzugt 3000 bis 4000 g/mol.

Besonders bevorzugte Ausführungsformen werden im Folgenden genannt:
a) In einer besonders bevorzugten Ausführungsform des Polymers (A) wird die Dimerfettsäure aus Linolen-, Linol- und/oder Ölsäure hergestellt, besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen.
b) In einer weiteren besonders bevorzugten Ausführungsform des Polymers (A) handelt es sich bei dem einzusetzenden Polyether um Polypropylenglycol oder um Polytetrahydrofuran und er besitzt zudem ein zahlenmittleres Molekulargewicht von 800 bis 1200 g/mol.
c) In einer weiteren besonders bevorzugten Ausführungsform des Polymers (A) werden die Komponenten (a) und (b) in einem molaren Verhältnis von 0,9/2,1 bis 1,1/1,9 eingesetzt.
d) In einer weiteren besonders bevorzugten Ausführungsform des Polymers (A) besitzt dieses eine Säurezahl von < 5 mg KOH/g.
e) In einer weiteren besonders bevorzugten Ausführungsform des Polymers (A) besitzt dieses ein zahlenmittleres Molekulargewicht von 3000 bis 4000 g/mol.

In einer ganz besonders bevorzugten Ausführungsform des Polymers (A) sind alle unter a) bis e) angegebenen Merkmale in Kombination realisiert.

### Komponente (B):

Als Komponente (B) wird mindestens ein Polyether der allgemeinen Strukturformel (II) 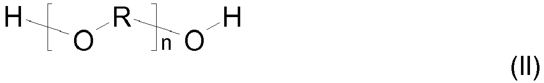 eingesetzt, wobei es sich bei R um einen C₃ bis C₆-Alkylrest handelt. Der Index n ist jeweils so zu wählen, dass der besagte Polyether ein zahlenmittleres Molekulargewicht von 250 bis 3000 g/mol besitzt. Besonders bevorzugt besitzt er ein zahlenmittleres Molekulargewicht von 1200 bis 2400g/mol und ganz besonders bevorzugt von 1600 bis 2200 g/mol.

In dem erfindungsgemäß einzusetzenden Polyether können alle n Reste R gleich sein. Ebenso ist es aber auch möglich, das unterschiedliche Arten von Resten R vorhanden sind. Bevorzugt sind alle Reste R gleich.

Bei R handelt es sich bevorzugt um einen C₃- oder einen C₄-Alkylenrest. Besonders bevorzugt handelt es sich um einen iso-Propylen- oder einen Tetramethylenrest.

Ganz besonders bevorzugt handelt es sich bei dem erfindungsgemäß einzusetzenden Polyether um Polypropylenglycol oder um Polytetrahydrofuran.

### Komponente (C):

Als Komponente (C) werden Verbindungen mit mindestens einer zur Anionenbildung befähigten funktionellen Gruppe und/oder mindestens einer anionischen Gruppe, und mindestens einer, insbesondere mindestens zwei, mit Isocyanaten reaktionsfähigen funktionellen Gruppen eingesetzt, wobei die Komponente (C) von den Komponenten (A) und (B) verschieden ist.

Geeignete mit Isocyanaten reaktionsfähige Gruppen sind insbesondere Hydroxylgruppen und primäre und sekundäre Aminogruppen, bevorzugt sind Hydroxylgruppen.

**Als** zur Anionenbildung befähigte Gruppen kommen vor allem Carboxyl- und Sulfonsäuregruppen in Betracht. Diese Gruppen können vor der Umsetzung neutralisiert werden, um eine Reaktion mit den Isocyanatgruppen zu vermeiden.

Als Verbindung, die mindestens zwei mit Isocyanaten reaktionsfähige Gruppen und mindestens eine zur Anionenbildung befähigte Gruppe enthält, werden bevorzugt solche, ausgewählt aus der Gruppe von Dihydroxycarbonsäuren, Dihydroxysulfonsäuren, Diaminocarbonsäuren und Diaminosulfonsäuren eingesetzt.

Besonders bevorzugt sind beispielsweise Dihydroxypropionsäure, Dimethylolpropionsäure, Dihydroxybernsteinsäure , Dihydroxybenzoesäure, alphadelta-Diaminovaleriansäure, 3,4-Diaminobenzoesaure, 2,4-Diamino-toluolsulfonsaure-(5) oder 4,4'-Diamino-di-phenylethersulfonsäure geeignet. Besonders bevorzugt geeignet sind auch die durch Oxidation von Monosacchariden zugänglichen Polyhydroxysäuren, z.B. Glukonsäure, Zuckersäure, Schleimsäure, Glukuronsäure und dergleichen.
Ganz besonders bevorzugt wird Dimethylolpropionsäure eingesetzt.

### Komponente (D):

Als Komponente (D) wird mindestens ein Polyisocyanat eingesetzt.

Als Polyisocyanate kommen grundsätzlich alle der üblichen und bekannten, auf dem Lackgebiet verwendeten Polyisocyanate in Betracht.

Beispiele geeigneter Polyisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Dicyclohexylmethan-4,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4- isocyanatobut-1-yl)cyclohexan, m-Tetramethylxylylendiisocyanat (=1,3-Bis-(2-isocyanatoprop-2-yl)-benzol) oder Toluylendiisocyanat.

Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden.

Urethangruppen aufweisende Polyisocyanate werden beispielsweise durch Umsetzung eines Teils der Isocyanatgruppen mit Polyolen, wie z. B. Trimethylolpropan und Glycerin, erhalten. Vorzugsweise werden die vorstehend im Detail beschriebenen Polyisocyanate verwendet.

Bevorzugt werden als Polyisocyanate gesättigte Isocyanate eingesetzt, besonders bevorzugt sind die Polyisocyanate ausgewählt aus der Gruppe von Isophorondiisocyanat und Dicyclohexylmethan-4,4'-diisocyanat ganz besonders bevorzugt ist Dicyclohexylmethan-4,4'-diisocyanat.

### Komponente (E):

Es kann gegenebenfalls mindestens ein Mono- oder Diol zur Herstellung des erfindungsgemäßen Polymers verwendet werden, das von den Komponenten (A), (B) und (C) verschieden ist.

Es können bevorzugt aliphatische Diole mit einem Molekulargewicht von 62 bis 500 g/mol eingesetzt werden.

Bei den Diolen kann es sich um cycloaliphatische, bevorzugt aber um acyclische aliphatische Verbindungen handeln, die zwei Hydroxylgruppen als Substituenten tragen.

Beispiele geeigneter Diole sind Ethylenglykol, Neopentylglykol, 1,2,-Propandiol, 2,2,-Dimethyl-1,3-Propandiol, 1,4- Butandiol, 1,3-Butandiol, 1,5,-Pentandiol, 2,2,4-Trimethyl-1,3-pentandiol,1 ,6- Hexandiol, 1,4-Cyclohexandimethanol und 1 ,2-Cyclohexandimethanol.

### Komponente (F):

Bei der Komponente (F) handelt es sich um mindestens eine Verbindung mit mehr als zwei mit Isocyanaten reaktionsfähigen funktionellen Gruppen, wobei die Komponente (F) von den Komponenten (A), (B) und (C) verschieden ist.

Geeignete Verbindungen mit mehr als zwei mit Isocyanaten reaktionsfähigen funktionellen Gruppen können Polyole mit mehr als zwei Hydroxylgruppen sein.

Beispiele für Polyole mit mehr als zwei Hydroxylgruppen sind Trimethylolethan, Trimethylolpropan, Trimethylolhexan, 1,2,4-Butantriol, Pentaerythritol sowie Dipentaerythritol.

Weitere geeignete Verbindungen Verbindungen mit mehr als zwei mit Isocyanaten reaktionsfähigen funktionellen Gruppen sind solche, die sowohl Amin- als auch Hydroxylgruppen tragen.

Ein besonders geeignetes Beispiel für Verbindungen, die sowohl Amin- als auch Hydroxylgruppen tragen ist Diethanolamin.

Bevorzugt wird als Komponente (F) Trimethylolpropan eingesetzt.

### Das Polymer

Das erfindungsgemäße Polymer wird bevorzugt erhalten, indem in einem ersten Schritt die Komponenten (A), (B), (C), (D) und gegebenenfalls (E) zu einem Isocyanatgruppen aufweisenden Zwischenprodukt umgesetzt werden. Die Umsetzung der (A), (B), (C) und (D), und gegebenenfalls (E) erfolgt nach den gut bekannten Verfahren der Polyurethanchemie (vgl. z.B. Kunststoff-Handbuch, Band 7: Polyurethane, hrsg. von Dr. G.Oertel, Carl Hanser Verlag München-Wien 1983) wobei die Umsetzung der Komponenten (A), (B), (C), (D) und gegebenenfalls (E) bevorzugt nicht stufenweise sondern in einem Schritt durchgeführt wird.

Die Umsetzung kann lösungsmittelfrei durchgeführt werden, bevorzugt wird sie aber in Lösungsmitteln durchgeführt, die gegenüber Isocyanatgruppen inert und mit Wasser mischbar sind. Vorteilhaft werden Lösungsmittel eingesetzt, die neben den oben beschriebenen Eigenschaften auch noch gute Löser für die hergestellten Polyurethane sind und sich aus wässrigen Mischungen leicht abtrennen lassen. Besonders gut geeignete Lösungsmittel sind Aceton und Methylethylketon.

Die Mengen der Komponenten (A), (B), (C), (D) und gegebenenfalls (E) werden so gewählt, dass das Äquivalentverhältnis der Isocyanatgruppen der Komponente (D) und gegebenenfalls (E) zu der Summe der OH-Gruppen der Komponenten (A), (B), (C) und gegebenenfalls (E) sowie der reaktiven Gruppen der Komponente (C) 2:1 bis 1,05:1, bevorzugt 1,5:1 bis 1,1:1, beträgt.

Die Säurezahl des erfindungsgemäßen Polymers kann durch Auswahl und Menge der Komponente (C) gesteuert werden. Bevorzugt wird die Menge an zur Anionenbildung befähigten Gruppen so ausgewählt, dass das erfindungsgemäße Polymer eine Säurezahl von < 50 mg KOH/g, bevorzugt 10 bis 25 mg KOH/g, aufweist.

Soweit nicht anders angegeben, gibt die Säurezahl die Menge an Kaliumhydroxid in mg an, die zur Neutralisation von 1g der jeweiligen Verbindung verbraucht wird (DIN EN ISO 2114).

Die Umsetzung des aus (A), (B), (C), (D) und gegebenenfalls (E) gebildeten isocyanatgruppenhaltigen Zwischenproduktes mit einer Verbindung mit mehr als zwei mit Isocyanaten reaktionsfähigen funktionellen Gruppen (F) in einen zweiten Schritt wird vorzugsweise durch die Stöchiometrie der eingesetzten Verbindungen so gesteuert, dass es zu Kettenverlängerungen und ggf. auch zu Verzweigungen der Polymermoleküle kommt. Bei dieser Umsetzung muss sorgfältig darauf geachtet werden, dass keine vernetzten Produkte erhalten werden (vgl. z.B. US-PS-4,423,179), d.h. dass das Molekulargewicht des aus den Komponenten (A) bis (F) aufgebauten Polyurethanharzes nicht über 50000 (Zahlenmittel) liegt. Andererseits sollte das Molekulargewicht auch nicht niedriger als 5000 (Zahlenmittel) sein.

Die Menge der Komponente (F) wird so gewählt, dass das Äquivalentverhältnis der OH-Gruppen der Komponente (F) zu den Isocyanatgruppen des Zwischenproduktes 0,5:1 bis 4:1, bevorzugt 0,75:1 bis 3,5:1, beträgt. Weiterhin ist bei der Auswahl der Menge der Komponente (F) das Molekulargewicht des Zwischenproduktes und das gewünschte Molekulargewicht des Polyurethanharzes zu berücksichtigen. Ist nämlich das Molekulargewicht des Zwischenproduktes niedrig und eine deutliche Molekulargewichtsvergrößerung erwünscht, so ist die eingesetzte Menge der Komponente (F) niedriger als im Fall eines hohen Molekulargewichts des Zwischenproduktes, bei dem die Komponente (F) hauptsächlich zum Abfangen der freien Isocyanatgruppen und somit zum Abbruch der Reaktion dient.

Außer dem beschriebenen, bevorzugten stufenweisen Aufbau des Polyurethanharzes aus den Komponenten (A) bis (F) ist auch eine gleichzeitige Umsetzung aller Komponenten (A) bis (F) möglich, wobei allerdings sorgsam darauf geachtet werden muss, dass unvernetzte Polyurethane erhalten werden.

Analog zum stufenweisen Aufbau ist auch bei der gleichzeitigen Umsetzung der Komponenten (A) bis (F) die Menge der einzelnen Komponenten (A) bis (F) so zu wählen, dass das entstehende Polyurethanharz ein Molekulargewicht von 5000 bis 50000 (Zahlenmittel).

In der Regel werden die Mengen der Komponenten (A) bis (F) so gewählt, dass das Äquivalentverhältnis der NCO-Gruppen der Komponente (D) und gegebenenfalls (E) zu der Summe der gegenüber NCO-Gruppen reaktiven Gruppen der Komponenten (A), (B), (C) und gegebenenfalls (E) sowie der reaktiven Gruppen der Komponente (C) 2:1 bis 1:2, bevorzugt 1,5:1 bis 1:1,5, beträgt.

Das so gewonnene Reaktionsprodukt kann noch freie Isocyanatgruppen aufweisen, die bei einer Dispergierung des Reaktionsproduktes in Wasser hydrolysiert werden. Dazu kann das Reaktionsprodukt in eine wässrige Phase überführt werden.

Das kann z.B. durch Dispergierung des Reaktionsgemisches in Wasser und Abdestillieren der bei in der Regel weniger als 100°C siedenden organischen Lösungsmittelanteile geschehen. Alternativ kann Wasser zum Reaktionsgemisch zugesetzt werden und der bei in der Regel weniger als 100°C siedenden organischen Lösungsmittelanteil abdestilliert werden.

Unter wässriger Phase ist Wasser, das auch noch organische Lösungsmittel enthalten kann, zu verstehen. Als Beispiel für Lösungsmittel, die im Wasser vorhanden sein können, seien heterocyclische, aliphatische oder aromatische Kohlenwasserstoffe, ein- oder mehrwertige Alkohole, Ether, Ester und Ketone, wie z.B. N-Methylpyrrolidon, Toluol; Xylol, Butanol, Ethyl- und Butylglykol sowie deren Acetate, Butyldiglycol, Ethylenglykoldibutylether, Ethylenglykoldiethylether, Diethylenglykoldimethylether, Cyclohexanon, Methylethylketon, Aceton, Isophoron oder Mischungen davon genannt.

Gegebenenfalls, zum Beispiel für den Fall dass die Komponente (C) zur Anionenbildung befähigte Gruppen enthält, kann vor Überführung in die wässrige Phase eine Neutralisation der zur Anionenbildung befähigten Gruppen durchgeführt werden um die Löslichkeit des Polymers in Wasser zu erhöhen. Ein solcher gegebenenfalls notwendiger Neutralisationsschritt kann entweder vor oder nach Zugabe der Komponente (F) erfolgen. Vorzugsweise erfolgt die Neutralisation nach der Zugabe der Komponente (F).

Für die gegebenenfalls notwendige Neutralisation der anionischen Gruppen können tertiäre Amine eingesetzt werden, wie beispielsweise Trimethylamin, Triethylamin, Dimethylanilin, Diethylanilin, Triphenylamin und dergleichen. Die Neutralisation kann aber auch mit anderen bekannten organischen und anorganischen Basen wie z.B. Natrium- und Kaliumhydroxid und Ammoniak durchgeführt werden.

Alternativ kann die Neutralisation auch durch den Einsatz von Aminen, die weitere mit Isocyanatgruppen reaktive Gruppen tragen durchgeführt werden. In diesem Fall können die Verbindungen in die Kette des Polymers eingebaut werden.

Durch Zugabe von Wasser kann der Feststoffgehalt der nach Überführung in die wässrige Phase erhaltenen Polymerdispersion eingestellt werden. Bevorzugt wird der Feststoffgehalt auf 20 bis 60 Gew.-%, besonders bevorzugt 25 bis 40 Gew.-%, ganz besonders bevorzugt auf 30 bis 38 Gew.-% eingestellt.

Zur Bestimmung des Feststoffgehaltes wird eine 1g große Probe der zu untersuchenden Substanz auf eine Blechschale mit einem Durchmesser von 6 cm aufgebracht. Mittels einer aufgebogenen Büroklammer wird das Material verteilt, bei hochviskosen Materialien wird zusätzlich 1ml eines geeigneten leichtsiedenden Lösungsmittels (z.B. Butanol) aufgebracht. Die benutzte Büroklammer verbleibt auf der Blechschale. In einem Umluftofen wird das Material dann bei 130°C für eine Stunde getrocknet. Aus dem resultierenden Gewicht im Verhältnis zur Einwaage ergibt sich nach Abzug des Leergweichtes der Schale und der Büroklammer dann der Feststoffgehalt des Harzes. Es werden immer Doppelbestimmungen durchgeführt.

### Der erfindungsgemäße Basislack

Die vorliegende Erfindung betrifft ferner einen pigmentierten wässrigen Basislack, welcher mindestens ein erfindungsgemäßes Polymer enthält.

Unter einem Basislack ist ein in der Automobil-Lackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Die Summe über die gewichtsprozentualen Anteile, bezogen auf das Gesamtgewicht des pigmentierten wässrigen Basislacks, aller erfindungsgemäßen Polymere beträgt bevorzugt 0,5 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des erfindungsgemäßen Polymers unter 0,5 Gew.-% so ist es gegebenenfalls möglich, dass keine Verbesserung der Haftung mehr erzielt wird. Liegt der Gehalt bei mehr als 30 Gew.-% so können unter Umständen Nachteile auftreten, wie zum Beispiel eine erhöhte Klebrigkeit des getrockneten Basislackfilm.

In einer bevorzugten Ausführungsform beträgt die Summe über die gewichtsprozentualen Anteile aller erfindungsgemäßen Polymere 0,5 bis 30 Gew.-% bezogen auf das Gesamtgewicht des pigmentierten wässrigen Basislacks. Für den Fall, dass bevorzugte Ausführungsformen der erfindungsgemäßen Polymere eingesetzt werden, beträgt die Summe über die gewichtsprozentualen Anteile aller bevorzugten Ausführungsformen der erfindungsgemäßen Polymere bevorzugt ebenfalls 0,5 bis 30 Gew.-% bezogen auf das Gesamtgewicht des pigmentierten wässrigen Basislacks. Besonders bevorzugt enthält der pigmentierte wässrige Basislack als erfindungsgemäße Polymere ausschließlich bevorzugte Ausführungsformen der erfindungsgemäßen Polymere.

In einer bevorzugten Ausführungsform beträgt die Summe über die gewichtsprozentualen Anteile aller erfindungsgemäßen Polymere 1 bis 20 Gew.-% bezogen auf das Gesamtgewicht des pigmentierten wässrigen Basislacks. Für den Fall, dass bevorzugte Ausführungsformen der erfindungsgemäßen Polymere eingesetzt werden, beträgt die Summe über die gewichtsprozentualen Anteile aller bevorzugten Ausführungsformen der erfindungsgemäßen Polymere bevorzugt ebenfalls 1 bis 20 Gew.-% bezogen auf das Gesamtgewicht des pigmentierten wässrigen Basislacks. Besonders bevorzugt enthält der pigmentierte wässrige Basislack als erfindungsgemäße Polymere ausschließlich bevorzugte Ausführungsformen der erfindungsgemäßen Polymere.

In einer ganz besonders bevorzugten Ausführungsform beträgt die Summe über die gewichtsprozentualen Anteile aller erfindungsgemäßen Polymere 1,5 bis 15 Gew.-% bezogen auf das Gesamtgewicht des pigmentierten wässrigen Basislacks. Für den Fall, dass bevorzugte Ausführungsformen der erfindungsgemäßen Polymere eingesetzt werden, beträgt die Summe über die gewichtsprozentualen Anteile aller bevorzugten Ausführungsformen der erfindungsgemäßen Polymere bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als erfindungsgemäße Polymere ausschließlich bevorzugte Ausführungsformen der erfindungsgemäßen Polymere.

In einer ebenfalls ganz besonders bevorzugten Ausführungsform beträgt die Summe über die gewichtsprozentualen Anteile aller erfindungsgemäßen Polymere 2 bis 12 Gew.-% bezogen auf das Gesamtgewicht des pigmentierten wässrigen Basislacks. Für den Fall, dass bevorzugte Ausführungsformen der erfindungsgemäßen Polymere eingesetzt werden, beträgt die Summe über die gewichtsprozentualen Anteile aller bevorzugten Ausführungsformen der erfindungsgemäßen Polymere bevorzugt ebenfalls 2 bis 12 Gew.-% bezogen auf das Gesamtgewicht des pigmentierten wässrigen Basislacks. Besonders bevorzugt enthält der pigmentierte wässrige Basislack als erfindungsgemäße Polymere ausschließlich bevorzugte Ausführungsformen der erfindungsgemäßen Polymere.

Als Beispiele für in diesem Sinne bevorzugte Ausführungsformen der erfindungsgemäßen Reaktionsprodukte seien die folgenden besonders bevorzugten Ausführungsformen genannt:
a) In einer besonders bevorzugten Ausführungsform des erfindungsgemäßen Reaktionsprodukts wird die Dimerfettsäure aus Linolen-, Linol- und/oder Ölsäure hergestellt und besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten.
b) In einer weiteren besonders bevorzugten Ausführungsform des erfindungsgemäßen Polymers handelt es sich bei dem erfindungsgemäß einzusetzenden Polyether (I) um Polypropylenglycol oder um Polytetrahydrofuran und er besitzt zudem ein zahlenmittleres Molekulargewicht von 800 bis 1200 g/mol.
c) In einer weiteren besonders bevorzugten Ausführungsform des erfindungsgemäßen Polymers handelt es sich bei dem erfindungsgemäß einzusetzenden Polyether (II) um Polypropylenglycol oder um Polytetrahydrofuran und er besitzt zudem ein zahlenmittleres Molekulargewicht von 1800 bis 2200 g/mol.
d) In einer weiteren besonders bevorzugten Ausführungsform des erfindungsgemäßen Polymers werden die Komponenten (a) und (b) in einem molaren Verhältnis von 0,9/2,1 bis 1,1/1,9 eingesetzt.
e) In einer weiteren besonders bevorzugten Ausführungsform des erfindungsgemäßen Polymers besitzt dieses eine Säurezahl von < 50 mg KOH/g.
f) In einer weiteren besonders bevorzugten Ausführungsform des erfindungsgemäßen Polymers besitzt dieses ein zahlenmittleres Molekulargewicht von 5000 bis 50000 g/mol.

Als weiteres Beispiel für in diesem Sinne bevorzugte Ausführungsformen der erfindungsgemäßen Polymere seien jene genannt, welche alle die unter a) bis f) angegebenen Merkmale in Kombination realisieren.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 (deutsche Fassung) der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Polymer enthalten die erfindungsgemäßen pigmentierten wässrigen Basislacke besonders bevorzugt mindestens ein weiteres Polyurethanharz (Z), das von den erfindungsgemäßen Polymeren verschieden ist, als Bindemittel.

Polyurethanharze enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeilen 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene weitere Polyurethanharz (Z) kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Es kann sich um ein Polyurethanharz handeln, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
oder
- funktionelle Gruppen, die durch Neutralisationsmittel in Anionen überführt werden können, und/oder anionische Gruppen (anionische Modifizierung)
und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Es kann sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Die Herstellung des Polyurethanharzes (Z) erfolgt nach den üblichen Methoden der Polymerchemie. Gemeint sind dabei beispielsweise die Polymerisation von Polyisocyanaten und Polyolen zu Polyurethanen und die dann gegebenenfalls folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN 53240, die Säurezahl gemäß DIN EN ISO 2114 bestimmt.

Unter filmbildendem Festkörper ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.
Der Gehalt an filmbildendem Festkörper im erfindungsgemäßen Basislack beträgt vorzugsweise 10,5 - 12,0 Gew.-%

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX® 1550 der Firma Cognis. Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörpergehalt des Beschichtungsstoffs nach DIN EN ISO 3251 bestimmt. Dazu wird der Beschichtungsstoff für 60 Minuten bei 130°C eingedampft.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
ein pigmentierter wässriger Basislack auf ein Substrat aufgebracht wird,
aus dem in Stufe (1) aufgebrachten Lack ein Polymerfilm gebildet wird,
auf die so erhaltene Basislackschicht ein Klarlack aufgebracht wird und anschließend
die Basislackschicht zusammen mit der Klarlackschicht gehärtet wird,
welches dadurch gekennzeichnet ist, dass in Stufe (1) ein pigmentierter wässriger Basislack eingesetzt wird, welcher das erfindungsgemäße Polymer enthält. Alle vorstehend genannten Ausführungen hinsichtlich des erfindungsgemäßen Polymers und des pigmentierten wässrigen Basislacks gelten auch für die erfindungsgemäße Verwendung. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Mehrschichtlackierungen und farb- und effektgebenden Mehrschichtlackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wir dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäß eingesetzten pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. Beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Polymers, des pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten solcher Filmfehler bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse (Doppellackierung), sondern nur der sogenannte "Spot" repariert. Dieser Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen in der OEM-Automobilreparaturlackierung.

Dabei kann der in Stufe (1) des erfindungsgemäßen Verfahrens zur Ausbesserung von Fehlstellen eingesetzte wässrige Basislack derselbe sein, wie der, welcher im erfindungsgemäßen Verfahren zur Herstellung der erfindungsgemäßen mehrschichtigen Lackierung eingesetzt wird. Der eingesetzte Basislack kann aber auch Teil eines Mischsystems zur Nachstellung von Farbtönen sein, die häufig im Autoreparaturbereich eingesetzt werden.

Die vorstehend genannten Ausführungen bezüglich des erfindungsgemäßen Polymers und des wässrigen pigmentierten Basislacks gelten auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Anschließend erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt.

Beim so genannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt.

Ein weiterer Aspekt der vorliegenden Erfindung ist die Verwendung des erfindungsgemäßen Polymers in pigmentierten wässrigen Basislacken zur Haftungsverbesserung. Hierunter ist die Haftungsverbesserung gegenüber solchen pigmentierten wässrigen Basislacken zu verstehen, die kein erfindungsgemäßes Polymer enthalten.

Das erfindungsgemäße Polymer kann zur Haftungsverbesserung bei der Lackierung von Metall- und Kunststoffsubstraten eingesetzt werden. Ebenso lässt es sich in der Autoreparaturlackierung einsetzen. Unter Autoreparaturlackierung ist sowohl die OEM-Automobilreparaturlackierung als auch die Automobilreparaturlackierung gemeint, welche beispielsweise in einer Werkstatt stattfindet.

Werden die besagten pigmentierten wässrigen Basislacke bei der Lackierung von Metall- und Kunststoffsubstraten eingesetzt, so führt der Einsatz des erfindungsgemäßen Polymers insbesondere zu einer Verbesserung der Haftung zwischen der Basislack- und der unmittelbar an diese angrenzende Klarlackschicht. Das erfindungsgemäße Polymer wird daher bevorzugt zur Haftungsverbesserung zwischen Basislack- und Klarlackschicht bei der Lackierung von Metall- und Kunststoffsubstraten verwendet.

Werden die besagten pigmentierten wässrigen Basislacke bei der Autoreparaturlackierung eingesetzt, so führt der Einsatz des erfindungsgemäßen Polymers insbesondere zu einer Haftungsverbesserung zwischen Basislack und Erstlackierung. Das erfindungsgemäße Polymer wird daher ebenso bevorzugt zur Verbesserung der Haftung zwischen Basislack- und Erstlackierung in der Autoreparaturlackierung, besonders bevorzugt in der OEM-Automobilreparaturlackierung verwendet.

Ein Haftungsverlust manifestiert sich darin, dass bei Einwirkung von Steinschlägen bei gealterten (der Witterung ausgesetzten) Reparaturlackierungen Abplatzungen auftreten. Bei der Reinigung der Karosserie mittels heute vielerorts üblichen Dampfstrahlgeräten kann dann eine solche, durch einen Steinschlag hervorgerufene kleine Abplatzung zu einer großflächigen Ablösung des Lackfilmes führen. Insbesondere betroffen sind hochchromatische Farben, die einen hohen Pigmentgehalt in der Basislackschicht aufweisen.

Im Folgenden wird die Erfindung anhand von Beispielen erläutert.

### Beispiele

### Spezifizierung bestimmter eingesetzter Komponenten und Messmethoden

### Dimerfettsäure:

Die eingesetzte Dimerfettsäure enthält weniger als 1,5 Gew.-% trimere Moleküle, 98 Gew.-% dimere Moleküle und kleiner 0,3 Gew.-%Fettsäure (Monomer). Sie wird auf der Basis von Linolen-, Linol- und Ölsäure hergestellt (Pripol™ 1012-LQ-(GD) (Fa. Croda).

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

### Herstellung des Polyesterpräpolymers PP1

In einem 4 l Edelstahlreaktor, ausgestattet mit Ankerrührer, Thermometer, Kühler, Thermometer zur Kopftemperaturmessung und Wasserabscheider werden 2 mol PolyTHF1000, 579,3 g dimerisierter Fettsäure (Pripol ® 1012, Fa. Uniqema), (1mol) und 51 g Cyclohexan auf 100°C aufgeheizt. Es wird langsam weitergeheizt bis zum Einsetzen der Kondensation. Bei einer maximalen Kopftemperatur von 85°C wird dann schrittweise bis auf 220°C weitergeheizt. Der Reaktionsfortschritt wird über die Bestimmung der Säurezahl verfolgt. Nach Erreichen einer Säurezahl von ≤ 3 mg KOH/g destilliert man noch vorhandenes Cyclohexan unter Vakuum ab. Man erhält ein zähflüssiges Harz, mit einer Viskosität von 4500 - 5800 mPas (gemessen bei 23°C mit einem Rotationsviskosimeter der Fa. Brookfield, Typ CAP 2000+, Spindel 3, Scherrate: 1333 s-1)

Das berechnete Molekulargewicht des Polyesterpräpolymers berechnet sich zu 2399 g/mol und weist eine OH-Funktionalität von 2 auf.

### Experimentelle Daten:

Mn: 2200 g/mol
Viskosität: 5549 mPas (gemessen bei 23°C mit einem Rotationsviskosimeter der Fa.
Brookfield, Typ CAP 2000+, Spindel 3, Scherrate: 1333 s-1

### Herstellung des Polyesterpräpolymers PP2

Der linearen Polyesterpolyols PP2 wurde analog zu PP1 aus dimerisierter Fettsäure (Pripol ® 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und ein (berechnetes) zahlenmittleres Molekulargewicht von 1379 g/mol auf mit einer OH-Funktionalität von 2,0

### Experimentelle Daten:

Mn: 1250 g/mol
Viskosität: 632 mPas (gemessen bei 23°C mit einem Rotationsviskosimeter der Fa.
Brookfield, Typ CAP 2000+, Spindel 3, Scherrate: 10000 s-1)

### Herstellung des Polyesterpräpolymers PP3

Analog zu PP1 wird ein lineares Polyesterpräpolymer hergestellt. Hexandiol wird nunmehr molar ausgetauscht gegen eine äquimolare Mischung von Neopentylglykol und Hexandiol. Man erhält ein lineares Polyesterharz mit einem zahlenmittleren Molekulargewicht von 1349 g/mol auf mit einer OH-Funktionalität von 2,0

### Experimentelle Daten:

Mn: 1320 g/mol
Viskosität: 430 mPas:(gemessen bei 23°C mit einem Rotationsviskosimeter der Fa.
Brookfield, Typ CAP 2000+, Spindel 3, Scherrate: 10000 s-1)

### Herstellung der Polyurethane PU1 bis PU4

In einem 4 L-Edelstahlreaktor, ausgerüstet mit Rührer, Rückflußkühler und Thermometer wird die Polyurethandipersion nach einem modifizierten Acetonverfahren synthetisiert.

Dazu werden die Komponenten A1 - A7 in den in Tabelle 1 angegebenen Mengen zusammen mit Methylethylketon zusammengegeben und bei 80 - 82°C unter Rühren zur Reaktion gebracht.

Man kontrolliert die Reaktion durch Titration des Isocyanatgehaltes mit Dibutylamin nach DIN EN ISO 3251. Ist der Gehalt an Isocyanat konstant und hat einen Isocyanatgehalt von 0,8 - 1,2% bezogen auf die vorliegende Lösung erreicht, wird ein auf die Menge an gemessenem freien NCO bezogener molarer Überschuss von 115% an Trimethylolpropan zugesetzt (n[NCO-Präpolymer]/n[Trimethylolpropan]=1,15).

Die Synthese wird fortgesetzt bis der NCO Gehalt einen Wert von weniger als 0,3% bezogen auf die Lösung erreicht hat. Die Viskosität beträgt dann 1200 - 1400 m.Pas (in 1:1 Mischung mit N-Ethyl-2-pyrrolidon, Platte/Kegel, CAP 03, 5000/s, 23°C).

Mit einem Überschuss an Butanol lässt man dann für 3 Stunden das verbliebene Isocyanat bei 80 - 82°C abreagieren.

Zur Neutralisation wird dann ein Gemisch aus Diethanolamin und Wasser zugegeben, so dass die Carboxylfunktionen zu ca 65 - 70% neutralisiert sind.

Nach weiteren 30 Minuten wird VE-Wasser zugesetzt um einen Feststoffgehalt (ohne Methylethylketon) von ca 28-30% zu erreichen. Im Vakuum wird dann das Methylethylketon abdestilliert, das Harz wird dann auf einen Feststoffgehalt gemäß Tabelle 2 eingestellt. PU1 wird im Anschluss mit 18 Gew.-% Pluriol P900 als Colösemittel versetzt.

**Tabelle 1: Komponenten für die Herstellung der Polyurethane**

| | **Gewichtsteile** | | | |
|---|---|---|---|---|
| **Komponente** | **PU1** | **PU2** | **PU3** | **PU4** |
| (A1) Dimethylolpropionsäure | 108,9 | 109,5 | 113,1 | 109,0 |
| (A2) Dicyclohexylmethan-4,4'- diisocyanat | 587,7 | 747,4 | | 607,0 |
| (A3) Isophorondiisocyanat | | | 534,8 | |
| (A4) Neopentylglykol | 22,6 | 79,5 | 36,7 | 35,3 |
| (A5) PolyTHF 2000 | | 1423,9 | 873,3 | 841,2 |
| (A6) PP1 | | | 822,3 | 841,2 |
| (A7) PP2 | 1218,7 | | | |
| (B1) Trimethylolpropan | 56,6 | 86,0 | 66,6 | 64,2 |
| (B2) Diethanolamin | 54,8 | 53,66 | 53,3 | 51,37 |

Dabei handelt es sich bei den Beispielen PU3 und PU4 um Dispersionen von erfindungsgemäßen Polymeren und bei den Beispielen PU1 und PU2 um Vergleichsbeispiele.

In Tabelle 2 sind Parameter der einzelnen Dispersionen angegeben.

**Tabelle 2: Parameter der Polyurethane**

| | **Gewichtsteile** | | | |
|---|---|---|---|---|
| **Komponente** | **PU1** | **PU2** | **PU3 (erfindungsg.)** | **PU4 (erfindungsg.)** |
| Mn / g/mol | 35703 | 29791 | 38131 | 37437 |
| Säurezahl | 24,6 | 18,8 | 19,4 | 18,6 |
| Feststoffgehalt / % | 30,0 | 30,5 | 34,4 | 34,7 |

### Herstellung der Polyurethans PU5

Analog zu Herstellung der Polyurethane PU1 bis PU4 werden zur Herstellung des Polyurethans PU5 1227 g des Polyesters PP3, 106,80 g Dimethlolpropionsäure, 17,51 g Neopentylglykol, 539 g Tetramethylxylylendiisocyanat bei einem Feststoffgehalt von 60% in Methylethylketon zur Reaktion gebracht. Nach Erreichen eines NCO-Gehaltes von 1,0 -1,25% werden 90 g Trimethylolpropan zugesetzt. Sobald eine Viskosität von 300 - 380 mPa.s (verdünnt mit N-Ethylpyrrolidon im Verhältnis 10:6) gemessen mit einem Platte Kegel Viskosimeter Brookfield CAP 03 bei 10000/s erreicht ist, wird mit einem Überschuß Butylglykol eventuell vorhandenes Isocyanat abreagiert.

Danach wird das Methylethylketon vollständig abdestilliert. Es wird Dimethylethanolamin bis zu einem Neutralisationsgrad von 85% zugesetzt. Mit weiterem Butylglykol wird dann auf einen Feststoffgehalt von 60% eingestellt.

### Herstellung des Mischlacks

Zur Herstellung des Mischlacks werden zunächst die Komponenten A1 und A2 gemäß Tabelle 3 zusammengegeben und vermischt. Nach Erhalt einer homogenen Mischung werden in der angegebenen Reihenfolge die Komponenten B1 bis B4 unter Rühren zugegeben.

**Tabelle 3: Komponenten für die Herstellung des Mischlacks**

| **Komponente** | **Gewichtsteile** |
|---|---|
| (A1) Wasser | 300 |
| (A2) Schichtsilikat (Laponite RD) | 10 |
| (B1) Polyurethan-Bindemittelzusammensetzung (25 % Festkörper, 5% Pluriol P900, 70 % Wasser) | 228 |
| (B2) Acrylatverdicker | 1 |
| (B3) Dimethylethanolamin | 2 |
| (B4) Wasser | 450 |

### Herstellung von Wasserbasislacken

Zur Herstellung der Wasserbasislacke wurden die in Tabelle 4 aufgeführten Bestandteile zusammengegeben und in einer Laborperlmühle bis zu einer Kornfeinheit nach Hegmann von < 5 Mikrometer gemahlen.

Im Anschluss wurden die jeweiligen Wasserbasislacke mit je 140 Gewichtsteilen des Mischlacks versetzt.

**Tabelle 4: Komponenten für die Herstellung der Wasserbasislacke**

| | **Gewichtsteile** | | | |
|---|---|---|---|---|
| **Komponente** | **E1** | **E2** | **E3 (erfindungsg.)** | **E4 (erfindungsg.)** |
| PU5 | 10 | 10 | 10 | 10 |
| PU1 | 47 | | | |
| PU2 | | 46,2 | | |
| PU3 | | | 41,0 | |
| PU4 | | | | 40,6 |
| VE-Wasser | 13,9 | 14,6 | 19,8 | 20,3 |
| Polyurethanverdicker | 0,14 | 0,14 | 0,14 | 0,14 |
| Heliogen Grün L9361 | 25 | 25 | 25 | 25 |
| Benetzungsmittel auf Basis eines ungesättigten Diols | 4 | 4 | 4 | 4 |

### Herstellung von Mehrschichtlackierungen und anwendungstechnische Untersuchung der Mehrschichtlackierungen

Die erhaltenen Basislacke E1 bis E4 werden jeweils mit einer Schichtdicke von 10 - 12 µm auf eine KTL (Cathoguard 500 schwarz, Fa. BASF Coatings GmbH) beschichtete Tafel mit 2,5 Spritzgängen aufgebracht; dabei wird nach jedem Spritzgang gewartet bis der Basislack matt auftrocknet. Anschließend wird ein handelsüblicher Klarlack der Marke Glasurit aufgebracht, danach wird für wird weitere 15 Minuten bei Raumtemperatur abgelüftet und dann für 30 Minuten bei 60°C im Umluftofen getrocknet.

Die Tafeln werden dann für 7 Tage bei Raumtemperatur gelagert, danach werden sie für 5 Tage bei 80°C im Ofen gelagert.

Die lackierten Bleche werden mittels eines Ritzstichels (z.B. Erichsen Modell 463), bestückt mit einer 0,5 mm Klinge auf einer Länge von 50 - 60 mm 2 mal in einem Winkel von 90° kreuzweise zueinander bis auf das Blech eingeritzt. Die Bleche werden dann so eingespannt, dass das eingeritzte Kreuz mittig unter einer kreisförmigen Aussparung mit einem Durchmesser von 40 mm platziert ist.

Bei einer Wassertemperatur von 50 ± 5° und einem Druck von 120 bar sowie einem Abstand von 100 ± 3mm wird der Wasserstrahl innerhalb von 30 sec 30 mal über die Aussparung geschwungen. Anschließend wird der relative Anteil der Abplatzung beurteilt. Die Ergebnisse sind in Tabelle 4 angegeben.

| | **E1** | **E2** | **E3 (erfindungsg.)** | **E4 (erfindungsg.)** |
|---|---|---|---|---|
| Ablösung in % | >95 | 80 | 20 | <5 |

## Patentansprüche

1. Polymer, herstellbar durch Umsetzung von
(A) mindestens einem Polymer, herstellbar durch Umsetzung von
(a) Dimerfettsäuren mit
(b) mindestens einem Polyether der allgemeinen Strukturformel (I) 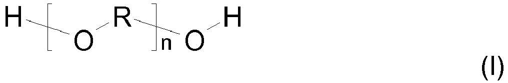 wobei es sich bei R um einen C₃- bis C₆-Alkylenrest handelt und n entsprechend so gewählt ist, dass der besagte Polyether ein zahlenmittleres Molekulargewicht von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht von 1500 bis 5000 g/mol und eine Säurezahl < 10 mg KOH/g besitzt,
(B) mindestens einem Polyether der allgemeinen Strukturformel (II) 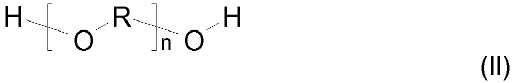 wobei es sich bei R um einen C₃- bis C₆-Alkylenrest handelt und n entsprechend so gewählt ist, dass der besagte Polyether ein zahlenmittleres Molekulargewicht von 250 bis 3000 g/mol besitzt,
(C) mindestens einer Verbindung mit mindestens einer zur Anionenbildung befähigten funktionellen Gruppe und/oder mindestens einer anionischen Gruppe, und mindestens einer, insbesondere mindestens zwei, mit Isocyanaten reaktionsfähigen funktionellen Gruppen wobei die Verbindung von (A) und (B) verschieden ist,
(D) mindestens einem Polyisocyanat, und
(E) gegebenenfalls mindestens einem Mono- oder Diol, das von (A), (B) und (C) verschieden ist,
(F) mindestens einer Verbindung mit mehr als zwei mit Isocyanaten reaktionsfähigen funktionellen Gruppen, wobei die Verbindung von (A), (B) und (C) verschieden ist,
und gegebenenfalls Neutralisation der zur Anionenbildung befähigten Gruppen der Komponente (C).

2. Polymer gemäß Anspruch 1, **dadurch gekennzeichnet, dass** die eingesetzten Dimerfettsäuren zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen.

3. Polymer nach mindestens einem der Ansprüche 1 oder 2, **dadurch gekennzeichnet, dass** es sich bei dem besagten Polyether der allgemeinen Strukturformel (I) um Polypropylenglycol oder um Polytetrahydrofuran handelt und dieser zudem ein zahlenmittleres Molekulargewicht von 800 bis 1200 g/mol besitzt.

4. Polymer nach mindestens einem der Ansprüche 1 bis 3, **dadurch gekennzeichnet, dass** es sich bei dem besagten Polyether der allgemeinen Strukturformel (II) um Polypropylenglycol oder um Polytetrahydrofuran handelt und dieser zudem ein zahlenmittleres Molekulargewicht von 1800 bis 2200 g/mol besitzt.

5. Polymer nach mindestens einem der Ansprüche 1 bis 4, **dadurch gekennzeichnet, dass** die Komponenten (a) und (b) in einem molaren Verhältnis von 0,9/2,1 bis 1,1/1,9 eingesetzt werden.

6. Polymer nach mindestens einem der Ansprüche 1 bis 5, **dadurch gekennzeichnet, dass** dieses ein zahlenmittleres Molekulargewicht von 5000 bis 50000 g/mol besitzt.

7. Polymer nach mindestens einem der Ansprüche 1 bis 6, **dadurch gekennzeichnet, dass** dieser eine Säurezahl von < 50 mg KOH/g besitzt.

8. Pigmentierter wässriger Basislack, **dadurch gekennzeichnet, dass** er mindestens ein Polymer nach mindestens einem der Ansprüche 1 bis 7 enthält.

9. Pigmentierter wässriger Basislack gemäß Anspruch 8, **dadurch gekennzeichnet, dass** die Summe über die gewichtsprozentualen Anteile, bezogen auf das Gesamtgewicht des pigmentierten wässrigen Basislacks, aller erfindungsgemäßen Polymere 0,1 bis 30 Gew.-% beträgt.

10. Pigmentierter wässriger Basislack nach Anspruch 8 oder 9, **dadurch gekennzeichnet, dass** er als weiteres Bindemittel mindestens ein weiteres Polyurethanharz enthält, das von den erfindungsgemäßen Polymeren verschieden ist.

11. Verwendung eines Polymers gemäß Anspruch 1 in pigmentierten wässrigen Basislacken zur Haftungsverbesserung.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß mindestens einem der Ansprüche 8 bis 10 eingesetzt wird.

13. Verfahren nach Anspruch 12, **dadurch gekennzeichnet, dass** es sich bei dem besagten Substrat aus Stufe (1) um eine Mehrschichtlackierung handelt, welche Fehlstellen besitzt.

14. Mehrschichtlackierung, herstellbar nach dem Verfahren gemäß Anspruch 12.

15. Verfahren nach Anspruch 13, **dadurch gekennzeichnet, dass** es sich bei der besagten Mehrschichtlackierung, welche Fehlstellen besitzt, um eine solche gemäß Anspruch 14 handelt.

## Claims

1. Polymer preparable by reacting
(A) at least one polymer, preparable by reacting
(a) dimer fatty acids with
(b) at least one polyether of general structural formula (I) 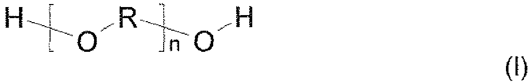 where R is a C₃ to C₆ alkylene radical and n is selected accordingly such that said polyether has a number-average molecular weight of 450 to 2200 g/mol, components (a) and (b) are used in a molar ratio of 0.7/2.3 to 1.3/1.7, and the resulting polymer has a number-average molecular weight of 1500 to 5000 g/mol and an acid number < 10 mg KOH/g,
(B) at least one polyether of general structural formula (II) 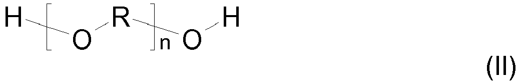 where R is a C₃ to C₆ alkylene radical and n is selected accordingly such that said polyether has a number-average molecular weight of 250 to 3000 g/mol,
(C) at least one compound having at least one anionic group and/or at least one functional group capable of forming anions,
and having at least one, more particularly at least two, isocyanate-reactive functional groups, the compound being different from (A) and (B),
(D) at least one polyisocyanate, and
(E) optionally at least one monool or diol which is different from (A), (B) and (C),
(F) at least one compound having more than two isocyanate-reactive functional groups, the compound being different from (A), (B) and (C),
and optionally neutralizing the groups of component (C) that are capable of forming anions.

2. Polymer according to Claim 1, **characterized in that** the dimer fatty acids used consist to an extent of at least 90% by weight of dimeric molecules, less than 5% by weight of trimeric molecules, and less than 5% by weight of monomeric molecules and other by-products.

3. Polymer according to at least one of Claims 1 or 2, **characterized in that** said polyether of general structural formula (I) is polypropylene glycol or polytetrahydrofuran and has, moreover, a number-average molecular weight of 800 to 1200 g/mol.

4. Polymer according to at least one of Claims 1 to 3, **characterized in that** said polyether of general structural formula (II) is polypropylene glycol or polytetrahydrofuran and has, moreover, a number-average molecular weight of 1800 to 2200 g/mol.

5. Polymer according to at least one of Claims 1 to 4, **characterized in that** components (a) and (b) are used in a molar ratio of 0.9/2.1 to 1.1/1.9.

6. Polymer according to at least one of Claims 1 to 5, **characterized in that** it has a number-average molecular weight of 5000 to 50 000 g/mol.

7. Polymer according to at least one of Claims 1 to 6, **characterized in that** it has an acid number of < 50 mg KOH/g.

8. Pigmented aqueous basecoat material, **characterized in that** it comprises at least one polymer according to at least one of Claims 1 to 7.

9. Pigmented aqueous basecoat material according to Claim 8, **characterized in that** the sum total of the weight-percentage fractions, based on the total weight of the pigmented aqueous basecoat material, of all the polymers according to the invention is 0.1% to 30% by weight.

10. Pigmented aqueous basecoat material according to Claim 8 or 9, **characterized in that** it comprises, as a further binder, at least one further polyurethane resin which is different from the polymers according to the invention.

11. Use of a polymer according to Claim 1 in pigmented aqueous basecoat materials for promoting adhesion.

12. Method for producing a multicoat paint system, by
(1) applying a pigmented aqueous basecoat material to a substrate,
(2) forming a polymer film from the coating material applied in stage (1),
(3) applying a clearcoat material to the resulting basecoat film, and subsequently
(4) curing the basecoat film together with the clearcoat film,
**characterized in that** in stage (1) a pigmented aqueous basecoat material according to at least one of claims 8 to 10 is used.

13. Method according to Claim 12, **characterized in that** said substrate from stage (1) is a multicoat paint system which has defect areas.

14. Multicoat paint system producible by the method according to Claim 12.

15. Method according to Claim 13, **characterized in that** said multicoat paint system which has defect areas is a paint system according to Claim 14.

## Revendications

1. Polymère, pouvant être fabriqué par mise en réaction de
(A) au moins un polymère, pouvant être fabriqué par mise en réaction de
(a) des acides gras dimères avec
(b) au moins un polyéther de formule structurale générale (I) 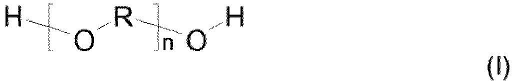 dans laquelle R est un radical alkylène en C₃ à C₆ et n est choisi de sorte que ledit polyéther présente un poids moléculaire moyen en nombre de 450 à 2 200 g/mol, les composants (a) et (b) étant utilisés en un rapport molaire de 0,7/2,3 à 1,3/1,7, et le polymère résultant présentant un poids moléculaire moyen en nombre de 1 500 à 5 000 g/mol et un indice d'acidité < 10 mg KOH/g,
(B) au moins un polyéther de formule structurale générale (II) 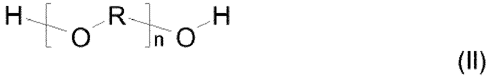 dans laquelle R est un radical alkylène en C₃ à C₆ et n est choisi de sorte que ledit polyéther présente un poids moléculaire moyen en nombre de 250 à 3 000 g/mol,
(C) au moins un composé contenant au moins un groupe fonctionnel apte à la formation d'anions et/ou au moins un groupe anionique, et au moins un, notamment au moins deux, groupes fonctionnels réactifs avec les isocyanates, le composé étant différent de (A) et (B),
(D) au moins un polyisocyanate et
(E) éventuellement au moins un mono- ou diol, qui est différent de (A), (B) et (C),
(F) au moins un composé contenant plus de deux groupes fonctionnels réactifs avec les isocyanates, le composé étant différent de (A), (B) et (C),
et éventuellement la neutralisation des groupes aptes à la formation d'anions du composant (C).

2. Polymère selon la revendication 1, **caractérisé en ce que** les acides gras dimères utilisés sont constitués par au moins 90 % en poids de molécules dimères, moins de 5 % en poids de molécules trimères et moins de 5 % en poids de molécules monomères et d'autres produits secondaires.

3. Polymère selon au moins l'une quelconque des revendications 1 ou 2, **caractérisé en ce que** ledit polyéther de formule structurale générale (I) est le polypropylène glycol ou le polytétrahydrofurane, et celui-ci présente par ailleurs un poids moléculaire moyen en nombre de 800 à 1 200 g/mol.

4. Polymère selon au moins l'une quelconque des revendications 1 à 3, **caractérisé en ce que** ledit polyéther de formule structurale générale (II) est le polypropylène glycol ou le polytétrahydrofurane, et celui-ci présente par ailleurs un poids moléculaire moyen en nombre de 1 800 à 2 200 g/mol.

5. Polymère selon au moins l'une quelconque des revendications 1 à 4, **caractérisé en ce que** les composants (a) et (b) sont utilisés en un rapport molaire de 0,9/2,1 à 1,1/1,9.

6. Polymère selon au moins l'une quelconque des revendications 1 à 5, **caractérisé en ce que** celui-ci présente un poids moléculaire moyen en nombre de 5 000 à 50 000 g/mol.

7. Polymère selon au moins l'une quelconque des revendications 1 à 6, **caractérisé en ce que** celui-ci présente un indice d'acidité < 50 mg KOH/g.

8. Vernis de base aqueux pigmenté, **caractérisé en ce qu'**il contient au moins un polymère selon au moins l'une quelconque des revendications 1 à 7.

9. Vernis de base aqueux pigmenté selon la revendication 8, **caractérisé en ce que** la somme des proportions en pourcentages en poids, par rapport au poids total du vernis de base aqueux pigmenté, de tous les polymères selon l'invention est de 0,1 à 30 % en poids.

10. Vernis de base aqueux pigmenté selon la revendication 8 ou 9, **caractérisé en ce qu'**il contient en tant que liant supplémentaire au moins une résine de polyuréthane supplémentaire, qui est différente des polymères selon l'invention.

11. Utilisation d'un polymère selon la revendication 1 dans des vernis de base aqueux pigmentés pour l'amélioration de l'adhésion.

12. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent,
**caractérisé en ce qu'**à l'étape (1), un vernis de base aqueux pigmenté selon au moins l'une quelconque des revendications 8 à 10 est utilisé.

13. Procédé selon la revendication 12, **caractérisé en ce que** le substrat de l'étape (1) est un vernissage multicouche qui présente des défauts.

14. Vernissage multicouche, pouvant être fabriqué par le procédé selon la revendication 12.

15. Procédé selon la revendication 13, **caractérisé en ce que** le vernissage multicouche qui présente des défauts est un vernissage multicouche selon la revendication 14.
